# EUROPÄISCHE PATENTSCHRIFT

(11) **EP 3 003 556 B1**
(45) Veröffentlichungstag und Bekanntmachung des Hinweises auf die Patenterteilung: **06.11.2019**
(21) Anmeldenummer: 14732107.9
(22) Anmeldetag: 05.06.2014
(51) Int. Cl.: B01L 3/00, B29C 45/16, B41M 5/26, B41M 5/28, G06K 1/12

(54) **LASERMARKIERBARES PROBENROEHRCHEN**
LASER-MARKABLE SAMPLE TUBE
TUBE À ÉCHANTILLON MARQUABLE PAR LASER

(30) Priorität: 06.06.2013 DE 102013009468
(43) Veröffentlichungstag der Anmeldung: 13.04.2016
(73) Patentinhaber: LVL Technologies GmbH & Co. KG, 74564 Crailsheim (DE); Marandjo Solutions & Services LDA & Comandita, P-9000-046 Funchal (PT)
(72) Erfinder: KOCH, Adam Mathias, H-7045 Györköny (HU)
(74) Vertreter: Wetzel, Fritz
(86) Internationale Anmeldenummer: PCT/EP2014/061712
(87) Internationale Veröffentlichungsnummer: WO 2014/195409

(56) Entgegenhaltungen:
- EP-A1- 2 870 998
- WO-A1-98/05427
- WO-A1-02/102571
- WO-A1-2014/006237
- WO-A2-2005/110600
- DE-A1-102008 035 728
- US-A1- 2006 099 112
- US-A1- 2011 308 335
- US-B1- 6 372 293

## Beschreibung

### Gebiet der Erfindung

Die Erfindung betrifft ein Probenröhrchen mit einem beschreibbaren Bereich, insbesondere ein Probenröhrchen, bei dem sich die Farbe des beschreibbaren Bereichs durch Bestrahlung ändert, und ein Verfahren zur Herstellung eines solchen Probenröhrchens.

### Stand der Technik

Herkömmliche Probenröhrchen werden für die Lagerung und den Transport von flüssigen Proben verwendet, die beispielsweise in chemischen, biochemischen oder biologischen Forschungslabors oder auch an Kliniken verwendet werden. Probenröhrchen können in verschiedenen Größen ausgebildet sein, je nachdem welche Menge der Probe zur Aufbewahrung notwendig ist.

Üblicherweise bestehen die Probenröhrchen aus verschiedenen Kunststoffen, die im Spritzgussverfahren mit gleichen oder verschiedenen Materialien hergestellt werden. Üblicherweise wird dafür ein Probenröhrchen aus einem transparenten Material gespritzt und durch Abkühlen ausgehärtet. In einem zweiten Schritt wird dann an der dafür vorgesehenen Stelle ein beschreibbarer Bereich an dem Probenröhrchen befestigt, beispielsweise indem eine beschreibbare Platte an das Röhrchen angeklebt, mit einem Laserverfahren verschweißt oder ein zweiter Spritzgussschritt an der dafür vorgesehenen Stelle durchgeführt wird. Dabei spricht man häufig von sogenannten Mehrkomponenten Verfahren. Dies erfordert entsprechend mehrere unterschiedliche Verfahrensschritte und ist daher insbesondere aus produktionstechnischer Sicht nicht optimal. Der beschreibbare Bereich ist üblicherweise ein Kunststoff, der durch Bestrahlung seine optischen Eigenschaften ändert, d.h., der beschreibbare Bereich wird bestrahlt, und der bestrahlte Bereich ändert daraufhin seine Farbe, so dass je nach bestrahltem Material beispielsweise ein Strichcode oder ein sogenannter 2D-Strichcode (Datamatrix Code) zu sehen ist. Dies dient der Unterscheidung der einzelnen Probenröhrchen, so dass eine Verwechselung ausgeschlossen und zudem eine Maschinenlesbarkeit bereitstellt werden kann.

Die CH 699 407 A1 offenbart ein Probenröhrchen, mit einer oberen, von Seitenwänden umgebenen Öffnung. Die Seitenwände gehen in einen Boden über, der eine im Wesentlichen flache Unterseite umfasst, die von der oberen Öffnung abgewandt ist. Das Probenröhrchen umfasst einen Kennzeichnungsbereich, der sich auf der Unterseite des Probenröhrchens befindet und der aus einem intransparenten Material mit einer ersten Farbe und einer transparenten Deckschicht besteht. Die transparente Deckschicht enthält einen laserempfindlichen Füllstoff, der durch die Bestrahlung mit Laser intransparent wird und so auf der Unterlage des intransparenten Materials einen Kontrast bildet, auf dem dann das mit dem Laser Geschriebene zu sehen ist. Auch hier muss das Röhrchen zuerst hergestellt und dann auf das gehärtete Röhrchen das intransparente Material in Form einer Plastikplakette aufgebracht werden. Nachfolgend wird dann das laserempfindliche Material über dem intransparenten Material befestigt. Ähnlich funktioniert auch das Probenröhrchen, das in der WO 2010/023 102 A1 gezeigt ist.

### Darstellung der Erfindung

Aufgabe der Erfindung ist es nun, ein einfach zu beschriftendes Probenröhrchen mit geringem Aufwand herzustellen.

Die Aufgabe wird gelöst durch ein Probenröhrchen mit einem beschreibbaren Bereich, wobei das Probenröhrchen einen Hauptkörper aus einer ersten Komponente und einen beschreibbaren Bereich aus einer zweiten Komponente aufweist, wobei das Probenröhrchen einstückig aus der ersten und zweiten Komponente ausgebildet ist und in einem Verfahrensschritt mit einer Nass-in-Nass Spritzgusstechnik hergestellt ist.

Dadurch erhält man ein einfach zu beschreibendes Probenröhrchen, das günstig in der Herstellung ist. Nass-in-Nass-Technik ist dabei nicht mit der herkömmlichen 2K-Technik verwandt und von dieser zu unterscheiden.

Die Aufgabe der Erfindung wird ebenso gelöst durch ein Probenröhrchen mit beschreibbarem Bereich, das einen Hauptkörper aus zumindest einem Polymer umfasst, wobei das Polymer in einem Bereich ein Additiv aufweist, welches dem Polymer eine beschreibbare Eigenschaft verleiht und so den beschreibbaren Bereich ausbildet. In dieser Weise kann das Probenröhrchen ganz simpel auch aus einer Komponente hergestellt werden und im flüssigen oder festen Zustand des Polymers ein Additiv hinzugefügt werden. Bevorzugt werden der Farbstoff und das Additiv im festen Zustand zugemischt und während dem Aufschmelzvorgang im Zylinder der Maschine homogenisiert.

Der beschreibbare Bereich des Probenröhrchens ist vorzugsweise am Boden des Röhrchens ausgebildet. Dies erleichtert nicht nur die Herstellung des Probenröhrchens, weil die Zuführkanäle des Werkzeugs klar getrennt sein können, sondern stellt auch sicher, dass der Kontaktbereich (also der Bereich, an dem sich die beiden Komponenten im flüssigen Zustand verbinden) einheitlich für alle Probenröhrchen ohne große Toleranzunterschiede hergestellt werden kann. Die beiden Materialien fließen ineinander und verbinden sich. Durch dieses "freie" Fließen bilden sich im Übergangsbereich Verläufe der transparenten und der eingefärbten Komponente.

Die zweite Komponente umfasst vorzugsweise ein Polymer mit einem Additiv, das dem Polymer eine beschreibbare Eigenschaft verleiht. Beispielsweise kann das Additiv Farbpigmente umfassen, die durch Bestrahlung ihre Farbe verändern oder das Additiv selbst kann durch die bei der Laserbestrahlung ausgeübte thermische Energie seine Farbe ändern. Bevorzugte Additive oder Pigmente oder auch Farbstoffe sind sogenannte thermochrome Substanzen, die durch Einfluss von thermischer Energie, z.B. wie bei einem Laser, durch Konformationsänderung die Farbe wechseln. Bevorzugt ist insbesondere ein Wechsel von Schwarz auf Weiß oder Weiß auf Schwarz, da hier der Kontrast maximal ist.

Ferner kann die zweite Komponente das gleiche Polymer wie die erste Komponente umfassen, so dass das Probenröhrchen grundsätzlich aus demselben Werkstoff besteht. Dies ist nicht nur für die Herstellung vorteilhaft, sondern garantiert auch für die Lagerung und Handhabung der Röhrchen die gleichen Materialeigenschaften, so dass eine Beschädigung durch verschiedene Wärmeausdehnungskoeffizienten vermieden werden kann (wenn z.B. die Probenröhrchen tiefgefroren werden müssen) .

Die zweite Komponente verändert vorzugsweise durch Bestrahlung, insbesondere Laserbestrahlung, ihre Farbe, so dass dadurch die Beschriftung auf dem beschreibbaren Bereich zu erkennen ist. Besonders bevorzugt ist es, dass die zweite Komponente schon im Ausgangszustand farbig ist, da sich dadurch bei zwei Farben (bestrahlt (z.B. rot) und nicht bestrahlt (z.B. schwarz)) ein besserer Kontrast ergibt.

Ein weiterer Gegenstand der Erfindung ist ein Probenröhrchen wie oben beschrieben, ferner umfassend einen Verschluss.

Der Verschluss kann ein Schraubdeckel mit Innengewinde oder Außengewinde oder ein Stopfen sein.

Vorzugsweise ist der Stopfen ein Polymerstopfen, welcher einen Schlitz oder Kreuzschlitz aufweist. Dadurch kann mit einer Kanüle ohne Zerstörung der Struktur des Stopfens eine Probe aus dem Probenröhrchen entnommen werden. Im Gegensatz zum herkömmlichen Durchstoßen des Stopfens mit einer Kanüle, gewährleistet der erfindungsgemäße Stopfen nach der Probenentnahme einen weitestgehend luftdichten Verschluss des Probenröhrchens. Es kann somit kaum Umgebungsluft in das Probenröhrchen gelangen.

Ferner bevorzugt ist, wenn der Schraubverschluss ein 2K-Polymer ist, bei dem eine Dichtung als integraler Bestandteil umfasst ist. Das bedeutet, dass durch herkömmliche 2K-Verfahrensführung eine Dichtung in einem Verfahrensschritt in den Schraubverschluss integriert werden kann. Dadurch können Arbeitsschritte und Kosten eingespart werden. Die Dichtung kann darüber hinaus beim Öffnen des Röhrchens nicht verlorengehen. Vorzugsweise ist der Schraubverschluss ebenfalls aus PP hergestellt.

Ein Verfahren zum Herstellen eines Probenröhrchens mit beschreibbarem Bereich, bei dem eine erste und zweite Komponente in eine Kavität eines Spritzgusswerkzeuges eingespritzt werden, umfasst die Schritte Einspritzen einer ersten Komponente zur Ausbildung eines Probenröhrchen-Hauptkörpers und das Einspritzen einer zweiten Komponente zur Ausbildung des beschreibbaren Bereichs, wobei das Einspritzen der zweiten Komponente derart erfolgt, dass die erste und die zweite Komponente zusammen ein einstückiges Probenröhrchen ausbilden und insbesondere einen Kontaktbereich ausbilden. Dieses Verfahren stellt ein Nass-in-Nass-Spritzgussverfahren dar, wobei als zweite Komponente vorzugsweise ein Polymer mit einem Additiv (Farbstoff) verwendet wird. Insbesondere ist das Polymer der ersten Komponente das Gleiche, wie das Polymer der zweiten Komponente. Das Einspritzen der zwei Komponenten erfolgt bevorzugt zumindest teilweise gleichzeitig.

### Kurze Beschreibung der Figuren

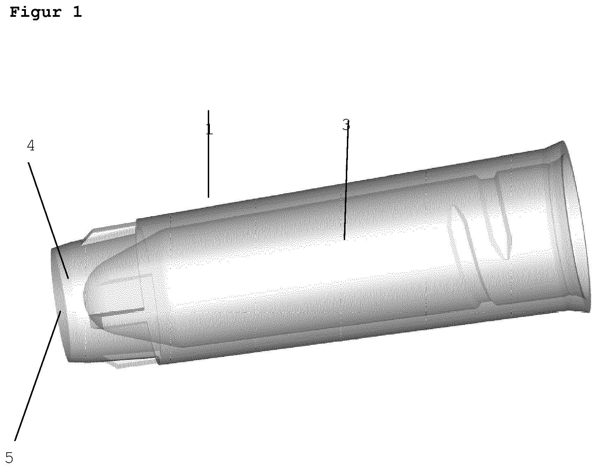

Fig. 1 zeigt ein Probenröhrchen gemäß der vorliegenden Erfindung.

### Beschreibung der bevorzugten Ausführungsformen

Im Folgenden werden die Begriffe "axial", "radial" und "umfänglich" verwendet. "Axial" bezeichnet dabei eine Richtung entlang einer Längsachse des Probenröhrchens, "radial" eine Richtung senkrecht zur Längsachse und "umfänglich" eine Richtung entlang des Umfangs des Probenröhrchens in der Ebene der radialen Richtungen. Ferner ist ein "oberes Ende" ein Ende, das mit der Kappe verschließbar ist, und ein "unteres Ende", das geschlossene Ende des Probenröhrchens.

Das Probenröhrchen 1 besteht im Wesentlichen aus Seitenwänden 3 und einem Boden 4, die in einen Hauptkörper 3 und einen beschreibbaren Bereich 5 ausbilden. Das Probenröhrchen 1 umfasst ferner eine Kappe (nicht gezeigt), die in üblicher Weise aufgeschraubt, mit einem Clip-Verschluss befestigt oder in anderer gängiger Weise auf dem Röhrchen angebracht werden kann.

Der Hauptkörper 3 des Röhrchens ist vorzugsweise aus einem transparenten Kunststoff, wie einem Polymer gefertigt. Als Grundkomponente bieten sich hierfür insbesondere Polypropylen an, es können aber ebenso andere für diesen Zweck geeignete Polymere und Kunststoffe verwendet werden, die dem Fachmann bekannt sind.

Das Röhrchen 1 weist an einer Stelle einen beschreibbaren oder markierbaren Bereich 5 auf, der am fertigen Probenröhrchen 1 mittels einer entsprechenden Vorrichtung beschrieben/markiert werden kann. So können auf diesem Bereich 5 beispielsweise Strichcodes ausgebildet werden. Vorzugsweise geschieht dies durch Bestrahlung des beschreibbaren Bereichs, wobei das Material, aus dem der beschreibbare Bereich besteht, auf die Bestrahlung in einer Weise reagiert, dass er im bestrahlten Bereich die Farbe ändert. Insbesondere eine Laserbestrahlung ist dafür sehr gut geeignet. Ebenso kann jedoch auch durch übermäßige Hitzeentwicklung, beispielsweise durch Hitzestrahlung oder auch durch einen sehr heißen Stempel eine Beschriftung auf dem beschreibbaren Bereich ausgeführt werden.

Der beschreibbare Bereich 5 ist in der bevorzugten Ausführungsform am Boden des Probenröhrchens ausgebildet, da dies Vorteile für die Fertigung hat, weil die Einspritzkanäle vorteilhafterweise voneinander entfernt angeordnet werden können. Als Material bietet sich ebenfalls ein Polymer, insbesondere das gleiche Polymer, wie für den Hauptkörper, an, wobei das Polymer ferner ein Additiv aufweist, im vorliegenden Fall beispielsweise ein Farbstoff oder Farbpartikel, die ihre Farbe unter Bestrahlung oder Hitzeentwicklung ändern. Insbesondere kann das Additiv mit dem Handelsnamen Iriotec® 8835 der Firma Merck, Darmstadt verwendet werden. Weitere Additive, die im Sinne der Erfindung Verwendung finden können sind MAXITHEN® HP 9B5757LS schwarz und MAXITHEN® HP HP1279LS weiss von Gabriel Chemie. Der beschreibbare Bereich 5 kann aber auch an jeder anderen Stelle des Röhrchens angeordnet sein. Man muss dann lediglich die Einspritzkanäle des Spritzgusswerkzeugs entsprechend anpassen.

Grundsätzlich kommen als Material der zweiten Komponente für den beschreibbaren Bereich 5 dieselben Werkstoffe in Frage, wie für den Hauptkörper. Die zweite Komponente kann selbstverständlich ebenfalls transparent sein und unter Bestrahlung ihre Farbe verändern, vorzugsweise ist die zweite Komponente jedoch schon vor der Bestrahlung farbig. Dadurch wird, wenn die zweite Komponente unter Bestrahlung ihre Farbe ändert, ein besserer Kontrast erzielt als mit einer transparenten zweiten Komponente.

Ein Probenröhrchen, wie oben beschrieben, wird in einem dafür vorgesehenen Werkzeug hergestellt. Das Werkzeug umfasst eine Kavität (den Hohlraum, in das die erste und zweite Komponente eingespritzt werden), die auf der Außenseite von den Wänden der Kavität und auf der Innenseite von einem in der Kavität liegenden Kern begrenzt wird. Einfach gesprochen ist die Form des Probenröhrchens als Hohlraum in einem Gusswerkzeug ausgebildet. In diesen Hohlraum führen ein oder mehrere Gusskanäle, im vorliegenden Fall insbesondere zwei Kanäle. Der erste Kanal ist dabei in einem oberen Bereich der Kavität angesiedelt, der zweite Kanal im Bereich des unteren Endes der Kavität. Wie erwähnt ist es jedoch möglich, sie je nach Anforderungen auszugestalten, d.h., wenn der beschreibbare Bereich nicht am Boden, sondern an der Seitenwand ausgeführt werden soll, kann der Gusskanal für die zweite Komponente auch mittig in der Kavität angeordnet sein. Bspw. können dann auch darüber und/oder darunter ein oder zwei Einspritzkanäle für die erste Komponente vorgesehen sein.

Gemäß einer weiteren Ausgestaltung der Erfindung weist das Gusswerkzeug einen Angussverteiler auf, von dem sich sternförmig der Einspritzkanal in die Kavitäten erstreckt. D.h., der Angussverteiler ist mittig angeordnet und sternförmig im Kreis um ihn herum sind beispielsweise vier bis zwölf Kavitäten für ein Probenröhrchen ausgebildet, die jeweils über einen Einspritzkanal mit dem Angussverteiler verbunden sind. Dadurch können gleichzeitig mehrere Probenröhrchen hergestellt werden, was die Effizienz der Herstellung erhöht. Dies gilt dann selbstverständlich für die erste und die zweite Komponente bzw. deren Einspritzkanäle. Das Werkzeug kann auch als Voll-Heisskanal ausgeführt werden, dann entfällt der Verteiler. Ein Werkzeug ist darüber hinaus nicht auf 12 Kavitäten beschränkt sondern kann eine unbestimmte Anzahl von Kavitäten aufweisen.

Das Werkzeug selbst ist in mehrere Ebenen geteilt, d.h., es gibt eine obere Platte mit den jeweiligen Einspritzkanälen für die erste Komponente, und eine untere Platte mit den Einspritzkanälen für die zweite Komponente. Zusätzlich kann es auch eine Mittelplatte geben, die dann jeweils nur die Kavität und keine Gusskanäle aufweist. Der Kern ist dagegen einstückig (aus einem Stück) und an der oberen Werkzeugplatte ausgebildet. Insbesondere ist am Kern bzw. an der Außenwand der Kavität dann auch schon ein Gewinde ausgeformt, dass zum verschließen des Röhrchens mit einer Kappe dienen kann. Im Falle eines Röhrchens, welches ein Aussengewinde aufweist, befindet sich das Gewinde in Schiebern oder Backen des Werkzeugs. Dies sind bewegliche Teile, welche das Gewinde entformen.

Zur Herstellung des Probenröhrchens wird nun das Werkzeug geschlossen und die Materialien (transparente erste Komponente und die zweite Komponente) des Artikels parallel eingespritzt. Damit jedoch der Großteil des Hauptkörpers aus der ersten Komponente besteht, kann entweder das Einspritzen der zweiten Komponente später begonnen werden, oder der Einspritzkanal ist mit einem entsprechend geringerem Volumen ausgebildet, so dass der Großteil des Röhrchens aus der ersten Komponente hergestellt wird.

Die erste und zweite Komponente werden in entsprechenden Behältern (z.B. Zylinder der Spritzgussmaschine) bereitgestellt, die mit den jeweiligen Angussverteilern bzw. den Einspritzkanälen verbunden sind. Die Materialien werden nun eingespritzt, zeitgleich oder mit etwas zeitlichem Versatz, so dass beide noch flüssigen Komponenten sich vermischen. Das Zusammentreffen der beiden Materialien wird als Bindenaht bezeichnet und stellt einen vermischten Übergangsbereich dar, in dem sich die erste und die zweite Komponente vermischen und nach dem Aushärten als ein einstückiges Röhrchen ausgebildet sind.

In einer bevorzugten Form ist die Bindenaht in einem Bereich B ausgebildet, so dass das Zusammentreffen der Materialien auf einer Höhe von insbesondere 2 mm geschieht. Dieses Zusammentreffen ist jedoch von Einspritzschuss zu Einspritzschuss und von Kavität zu Kavität verschieden, bzw. kann variieren. Bei 2 mm beispielsweise um +/- 1,5 mm. In einer anderen bevorzugten Ausführungsform kann der beschreibbare Bereich auch nur am Boden 4 ausgebildet sein, die Bindenaht, bzw. der Kontaktbereich also unter den Seitenwänden liegen. Dadurch wird der gesamte Inhalt des Probenröhrchens sichtbar, sofern die erste Komponente transparent ist.

Nach dem volumetrischen Füllen der Kavität wird ein Einspritzkanal geschlossen und der Nachdruck in der Kavität über die jeweils andere Komponente durchgeführt. Vorzugsweise wird hierfür (für den Nachdruck) die farbige Komponente verwendet, so dass sichergestellt ist, dass der beschreibbare Bereich auch ausreichend groß ist. Da dies jedoch nur den Nachdruck betrifft, der lediglich die Schrumpfung des in der Kavität befindlichen Kunststoffs nach dem Einspritzen betrifft, ist gleichzeitig auch sichergestellt, dass der beschreibbare Bereich nicht aus Versehen zu groß wird. Nach dem Nachdruck wird das gegossene oder eingespritzte Probenröhrchen gekühlt und das Werkzeug geöffnet, so dass der Kunststoffartikel (das Probenröhrchen) ausgestoßen werden kann. Das Ausstoßen erfolgt über eine auswerferseitige Abstreifplatte, das Ausstoßen der Angüsse erfolgt in der Regel auch über die Abstreifplatte, die die Probenröhrchen vom Kern abstreift. Es kann aber auch mit Hilfe von Auswerferstiften durchgeführt werden, die sich vorzugsweise in den Einspritzkanälen befinden. Kurz gesagt, lässt sich der Prozessablauf wie folgt beschreiben: Das Werkzeug schließt, beide Materialien werden eingespritzt, der Kunststoffartikel wird gekühlt und das Werkzeug öffnet sich. Der Kunststoffartikel und der Anguss der transparenten Komponente werden abgestreift bzw. ausgestoßen und fallen nach unten in den Ausfallschacht der Maschine. Die Herstellung der Probenröhrchen wurde vorliegend von der Firma POLAR-FORM auf diese Weise durchgeführt.

Für die Kühlung weist das Spritzgusswerkzeug insbesondere eine Kühleinrichtung (z.B. eine Wasserkühlung) auf, um die Herstellung zu beschleunigen.

Ein solches Probenröhrchen kann selbstverständlich auch aus mehr als nur zwei Komponenten bestehen, so dass je nach Anforderung verschiedene Materialien mit verschiedenen Eigenschaften verwendet werden können. Dafür müssen selbstverständlich auch verschiedene Einspritzkanäle dann vorgesehen sein. Wichtig ist jedoch, dass sich die Materialien so vermischen lassen, dass am Ende ein einstückiges Probenröhrchen entsteht. Zusätzlich können selbstverständlich auch noch andere Komponenten am Probenröhrchen angebracht werden.

## Patentansprüche

1. Probenröhrchen (1) mit beschreibbarem Bereich (5), das einen Hauptkörper aus einer ersten Komponente und einen beschreibbaren Bereich (4) aus einer zweiten Komponente umfasst, **dadurch gekennzeichnet, dass** Seitenwände (3) und Boden (4) des Probenröhrchens (1) aus der ersten und zweiten Komponente einstückig ausgebildet sind und in einem Verfahrensschritt mit einer Nass-in-Nass Spritzgusstechnik hergestellt sind, wobei die erste und die zweite Komponente das gleiche Polymer als Grundkomponente umfassen und wobei die zweite Komponente ein Polymer mit einem Additiv umfasst, das dem Polymer eine beschreibbare Eigenschaft verleiht und wobei der beschreibbare Bereich (5) durch Bestrahlung beschreibbar ist.

2. Probenröhrchen (1) nach Anspruch 1, bei dem der beschreibbare Bereich (5) am Boden (4) des Probenröhrchens (1) ausgebildet ist.

3. Probenröhrchen (1) nach einem der vorhergehenden Ansprüche, bei dem die zweite Komponente vor der Bestrahlung intransparent ist.

4. Probenröhrchen (1) nach einem der vorhergehenden Ansprüche, ferner umfassend einen Verschluss.

5. Probenröhrchen (1) nach Anspruch 4, wobei der Verschluss ein Schraubdeckel mit Innengewinde oder Außengewinde oder ein Stopfen ist.

6. Probenröhrchen (1) nach Anspruch 4 oder 5, wobei der Stopfen ein Polymerstopfen ist, welcher einen Schlitz oder Kreuzschlitz aufweist.

7. Probenröhrchen (1) nach Anspruch 5, wobei der Schraubdeckel ein 2K-Polymer ist, bei dem eine Dichtung als integraler Bestandteil umfasst ist.

8. Verfahren zum Herstellen eines Probenröhrchens (1) mit beschreibbarem Bereich nach einem der Ansprüche 1 bis 7, bei dem eine erste und eine zweite Komponente in eine Kavität eines Spritzgusswerkzeugs eingespritzt werden, umfassend die Schritte:
- Einspritzen einer ersten Komponente zur Ausbildung eines Hauptkörpers des Probenröhrchens (1);
- Einspritzen einer zweiten Komponente zur Ausbildung des beschreibbaren Bereichs (5);
wobei das Einspritzen der zweiten Komponente derart erfolgt, dass die erste und zweite Komponente zusammen einstückig die Seitenwände (3) und den Boden (4) des Probenröhrchens (1) ausbilden.

## Claims

1. Sample tube (1) with a writable area (5), which comprises a main body made of a first component and a writable area (4) made of a second component, **characterized in that** side walls (3) and base (4) of the sample tube (1) are formed in one piece from the first and second component and are produced in one process step with a wet-on-wet injection moulding technique, wherein the first and the second component comprise the same polymer as basic component and wherein the second component comprises a polymer with an additive which gives the polymer a writable property and wherein the writable area (5) can be written on by means of irradiation.

2. Sample tube (1) according to claim 1, in which the writable area (5) is formed on the base (4) of the sample tube (1).

3. Sample tube (1) according to one of the preceding claims, in which the second component is non-transparent before irradiation.

4. Sample tube (1) according to one of the preceding claims, further comprising a closure.

5. Sample tube (1) according to claim 4, wherein the closure is a screw cap with an internal thread or external thread or a stopper.

6. Sample tube (1) according to claim 4 or 5, wherein the stopper is a polymer stopper which has a slot or crossed slot.

7. Sample tube (1) according to claim 5, wherein the screw cap is a 2-component polymer comprising a seal as integral constituent.

8. Process for producing a sample tube (1) with a writable area according to one of claims 1 to 7, in which a first and a second component are injected into a cavity of an injection-moulding tool, comprising the steps:
- injecting a first component to form a main body of the sample tube (1);
- injecting a second component to form the writable area (5);
wherein the injection of the second component is effected such that the first and second component together form in one piece the side walls (3) and the base (4) of the sample tube (1).

## Revendications

1. Tube à échantillon (1) doté d'une zone inscriptible (5), qui comprend un corps principal en un premier composant et une zone inscriptible (4) en un second composant, **caractérisé en ce que** les parois latérales (3) et le fond (4) du tube à échantillon (1) sont réalisés d'un seul tenant à partir du premier et du second composant et sont fabriqués dans une étape de procédé avec une technique de moulage par injection mouillé sur mouillé, le premier et le second composant comprenant le même polymère en guise de composant de base et le second composant comprenant un polymère doté d'un additif, qui confère au polymère une propriété inscriptible et la zone inscriptible (5) pouvant recevoir une inscription par irradiation.

2. Tube à échantillon (1) selon la revendication 1, dans lequel la zone inscriptible (5) est réalisée sur le fond (4) du tube à échantillon (1).

3. Tube à échantillon (1) selon l'une des revendications précédentes, dans lequel le second composant est non transparent avant l'irradiation.

4. Tube à échantillon (1) selon l'une des revendications précédentes, comprenant en outre un élément de fermeture.

5. Tube à échantillon (1) selon la revendication 4, dans lequel l'élément de fermeture est un couvercle fileté doté de filets intérieurs ou de filets extérieurs ou un bouchon.

6. Tube à échantillon (1) selon la revendication 4 ou 5, dans lequel le bouchon est un bouchon en polymère, qui comporte une fente ou une fente cruciforme.

7. Tube à échantillon (1) selon la revendication 5, dans lequel le couvercle fileté est un polymère à deux composants, qui comprend un élément d'étanchéité qui fait partie intégrante de celui-ci.

8. Procédé de fabrication d'un tube à échantillon (1) doté d'une zone inscriptible selon l'une des revendications 1 à 7, dans lequel un premier et un second composant sont injectés dans une cavité d'un outil de moulage par injection, comprenant les étapes :
- injection d'un premier composant pour former un corps principal du tube à échantillon (1) ;
- injection d'un second composant pour former la zone inscriptible (5) ;
l'injection du second composant étant effectuée de telle manière que le premier et le second composant forment ensemble d'un seul tenant les parois latérales (3) et le fond (4) du tube à échantillon (1).
